# FASCICULE DE BREVET EUROPEEN

(11) **EP 0 702 420 B1**
(45) Date de publication et mention de la délivrance du brevet: **13.05.1998**
(21) Numéro de dépôt: 95410108.5
(22) Date de dépôt: 13.09.1995
(51) Int. Cl.: H01L 41/04, H02N 2/14

(54) **Machine à ondes acoustiques de surface**
Akustischer Oberflächenwellenmotor
Surface acoustic wave motor

(30) Priorité: 16.09.1994 FR 9411339
(43) Date de publication de la demande: 20.03.1996
(73) Titulaire: CROUZET Automatismes, 26000 Valence (FR)
(72) Inventeur: Nogarede, Bertrand, Laboratoire d'Electrotech., F-31070 Toulouse Cedex (FR)
(74) Mandataire: de Beaumont, Michel

(56) Documents cités:
- EP-A- 0 404 023
- WO-A-91/08594
- PATENT ABSTRACTS OF JAPAN, vol. 17, no. 424 (E-1410) 6 Août 1993; & JP-A-05 083 962

## Description

La présente invention concerne une machine à ondes acoustiques de surface.

Des moteurs à ondes acoustiques de surface ont déjà été décrits, par exemple dans le brevet des Etats-Unis d'Amérique 4 562 374 de T. Sashida. Le principe de fonctionnement d'un tel moteur est illustré en figure 1 du brevet Sashida reproduite dans la figure 1 ci-jointe. Une onde progressive de surface de type onde de Rayleigh produite à la surface d'un corps élastique fixe 1 provoque à la surface de ce corps des ondulations. Si une pièce mobile 2 est pressée contre le corps 1, elle sera entraînée par le déplacement des sommets A-A' de ces ondulations. Les sommets A-A' parcourent une trajectoire elliptique Q et leur vitesse de déplacement transversal est liée à la fréquence d'oscillation et à l'amplitude de leur déplacement. En pratique, la fréquenoe d'excitation des ondes de surface doit être voisine d'une fréquence de résonance du corps à la surface duquel on veut produire ces ondes et cette fréquence ne peut être modifiée que dans une petite plage si l'on veut garder une amplitude non-négligeable (par exemple de l'ordre de 10 micromètres) des déplacements des sommets orthogonalement à la surface dans laquelle sont formées les ondulations. Un léger désaccord de fréquence par rapport à la fréquence de résonance se traduit par une variation importante d'amplitude. Ainsi, la relation entre la vitesse de déplacement des sommets A et A' dans la direction de la flèche N et la fréquence d'excitation est une relation non-linéaire complexe.

Le moteur à ondes acoustiques de surface du brevet des Etats-Unis d'Amérique 4 562 374 présente les avantages d'un relativement bon rendement, d'un faible encombrement et d'un faible poids pour un couple donné, et de l'existence d'un couple de maintien à l'arrêt (c'est-à-dire qu'en l'absence de signal, la pièce mobile 2 est appliquée contre la pièce fixe 1 et qu'une force de frottement non-négligeable existe entre elles).

Néanmoins, ce moteur présente l'inconvénient de ne pouvoir être commandé en vitesse autrement qu'en prévoyant un système de capteur et de boucle de réaction. Il en est de même si l'on veut commander ce moteur en position. L'utilisation de tels capteurs et boucles d'asservissement entraîne une complexification importante du moteur et un coût élevé qui détruit les avantages premiers de ce moteur.

Pour résoudre ce problème, Satoshi Segawa (NEC Res. & Develop., Vol. 33, N° 1, janvier 1992) a proposé d'intégrer un capteur de déplacement au moteur lui-même.

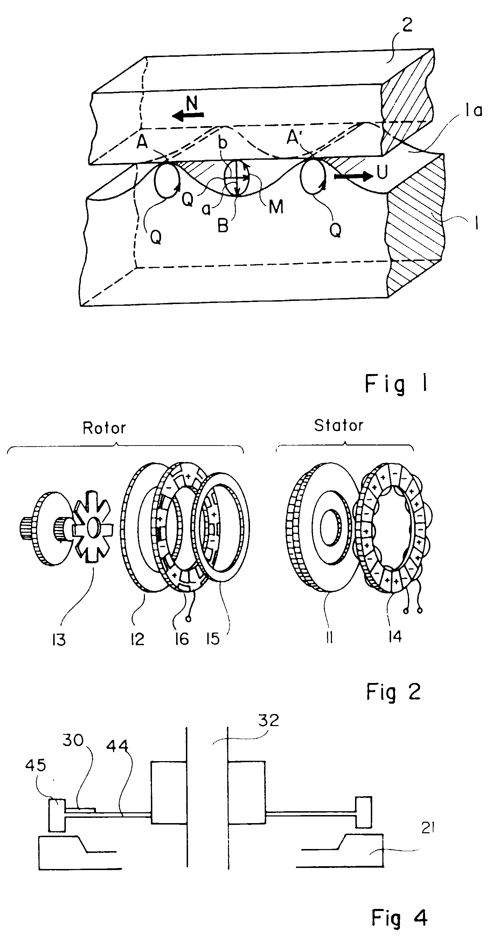

La figure 2 de la présente demande reproduit la figure 1 de cet article de Segawa qui concerne une réalisation d'un moteur dans lequel le stator et le rotor sont constitués de pièces annulaires 11 et 12 en regard sollicitées l'une contre l'autre par un ressort 13. Un système d'excitation constitué d'une céramique piézoélectrique 14 est fixé à la face arrière du stator 11 pour y créer des ondes acoustiques de surface. Entre l'anneau statorique 11 et l'anneau rotorique 12 sont disposées successivement une garniture 15 et une bague détectrice en céramique piézoélectrique 16.

Segawa expose que les compressions produites par les ondes acoustiques de surface du stator et transmises par la garniture 15 à la bague détectrice 16 permettent de détecter un déphasage entre le rotor et le stator et donc de donner une indication de la position en rotation du rotor par rapport au stator.

Ce système présente l'inconvénient d'être relativement complexe puisqu'il nécessite l'emploi d'un détecteur constitué d'une couronne piézoélectrique spécifique dont les différents secteurs doivent être convenablement câblés les uns aux autres. De plus, comme ce détecteur ne peut être appliqué directement contre le stator, il faut prévoir une garniture supplémentaire. Ces diverses adjonctions augmentent l'inertie du rotor et donc en particulier son temps de réponse. Par ailleurs, les systèmes de détection de phase impliquent l'utilisation de circuits électroniques complexes et précis et, de préférence, des systèmes numériques comme cela est proposé par Segawa.

Un objet de la présente invention est de prévoir une machine tournante à rotor et stator annulaires, dans laquelle des ondes acoustiques progressives sont créées dans le stator, comprenant des moyens simples de détection de la vitesse relative des rotor et stator.

Un autre objet de la présente invention est de prévoir l'utilisation d'une telle machine comme capteur de vitesse de rotation d'un arbre lié au rotor, le rotor n'étant pas entraîné par le stator.

Pour atteindre ces objets, la présente invention prévoit de dimensionner le rotor pour que des vibrations dans le stator y excitent des vibrations de même fréquence et de moindre amplitude quand ces deux pièces sont fixes l'une par rapport à l'autre, et de détecter les vibrations induites au rotor par le stator.

Selon un premier aspect de la présente invention, le rotor est dimensionné pour présenter une fréquence de résonance pour les ondes acoustiques de surface dans le même mode et sensiblement dans la même plage que le stator.

Selon un deuxième aspect de la présente invention, le rotor est constitué pour présenter une forte souplesse (compliance) dans une direction perpendiculaire à sa surface principale. Ainsi des déformations appliquées à la surface inférieure du rotor se répercuteront du côté de la surface supérieure.

Plus particulièrement, la présente invention prévoit une machine tournante comprenant deux pièces annulaires coaxiales mobiles en rotation l'une par rapport à l'autre dont les faces en vis-à-vis sont en contact, la première pièce étant excitée en vibration pour y créer des ondes progressives de surface à une fréquence située dans une plage de fréquences de résonance de rang donné de cette première pièce. La deuxième pièce est telle que des vibrations dans la première pièce y excitent des vibrations de même fréquence et de moindre amplitude quand ces deux pièces sont fixes l'une par rapport à l'autre ; un détecteur de vibration est monté sur la deuxième pièce ; et un circuit est prévu pour fournir un signal caractéristique de la différence de fréquence entre la fréquence d'excitation de la première pièce et la fréquence de vibration détectée sur la deuxième pièoe, cette différence étant caractéristique de la vitesse de rotation relative des deux pièces annulaires.

Selon un mode de réalisation de la présente invention, la première pièce est un stator et la deuxième pièce un rotor.

Selon un premier aspect de la présente invention, le rotor est dimensionné pour présenter une fréquence de résonance pour les ondes acoustiques de surface dans le même mode et sensiblement dans la même plage que le stator.

Selon un second aspect de la présente invention, le rotor est constitué pour qu'il présente une forte souplesse (compliance) dans une direction axiale. Dans un mode de réalisation, le rotor comprend un voile minoe de liaison entre l'arbre de rotation et une couronne rotorique de faible section, le détecteur de vibration étant une céramique disposée sur le voile au voisinage de la couronne.

Selon un mode de réalisation de la présente invention, le coefficient de frottement entre les pièces en regard est élevé et le signal de différence est envoyé à une première entrée d'un circuit d'asservissement dont la deuxième entrée reçoit un signal de consigne.

Selon un mode de réalisation de la présente invention, la machine tournante constitue un capteur tachymétrique et le coefficient de frottement entre les pièces en regard est faible, la première pièce étant fixe et la deuxième pièce étant solidaire d'un arbre entraîné dont on veut détecter la vitesse.

Ces objets, caractéristiques et avantages ainsi que d'autres de la présente invention seront exposés en détail dans la description suivante d'un mode de réalisation particulier faite, à titre non-limitatif, en relation avec les figures jointes parmi lesquelles :
les figures 1 et 2, décrites précédemment, rappellent l'état de la technique et le problème posé ;
la figure 3 représente un mode de réalisation d'une machine tournante selon la présente invention ;
la figure 4 représente un mode de réalisation d'un rotor selon la présente invention ; et
la figure 5 représente un mode de réalisation d'un système électronique adapté à la machine tournante selon la présente invention.

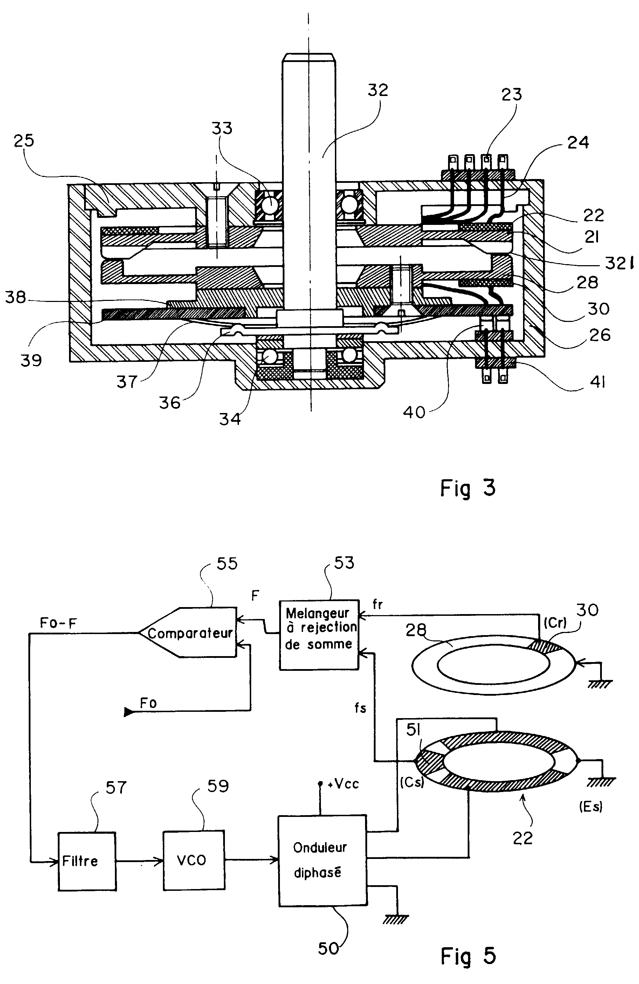

Comme le représente la figure 3, dans un mode de réalisation détaillé, la machine tournante selon la présente invention comprend un stator 21 similaire au stator 11 de la figure 2 dont la face arrière est couplée à un excitateur piézoélectrique 22 similaire à l'excitateur 14 de la figure 2. L'excitateur piézoélectrique 22 est un élément annulaire polyphasé à polarisation alternée comprenant, comme cela est illustré en figure 4, une électrode auxiliaire de mesure. Cet excitateur piézoélectrique est couplé à un bornier 23 par des fils de connexion 24. Ce stator est lié à un bâti 25 muni d'un couvercle 26. En contact avec le stator est disposé un rotor annulaire 28 en un point au moins de la périphérie duquel est disposé un capteur piézoélectrique 30. Eventuellement, un produit de revêtement 321 est disposé sur au moins l'une des faces en regard du stator et du rotor. Le rotor est lié à un arbre 32 monté sur des roulements 33 et 34 solidaires du bâti et de son couvercle par exemple par un ensemble de pièces comprenant un disque d'entrainement 36, un ressort 37 pressant le rotor contre le stator, et un support de disque 38. Dans un mode de réalisation, le support de disque est lié à un disque d'alimentation 39 à la face interne duquel sont reliés des conducteurs recevant le signal du capteur piézoélectrique 30 et dont la face extérieure comprend un collecteur à contacts glissants 40 fournissant un signal sur un bornier 41.

Cet agencement mécanique est illustré uniquement à titre d'exemple et est susceptible de nombreuses variantes, notamment en ce qui concerne les pièces de liaison du rotor à l'arbre et le mode de liaison électrique entre le capteur 30 et le bornier 41. Par exemple, du fait que le signal dudit capteur est un signal de faible énergie disponible sur seulement deux fils, on pourra aisément utiliser un système à transformateur tournant pour éviter l'utilisation d'un système à collecteur toujours susceptible de défaillance.

Dans les machines tournantes à excitation piézoélectrique classiques, telles par exemple que celle décrite par Segawa, les caractéristiques vibratoires du rotor et notamment les propriétés de propagation d'ondes progressives de surface ne sont pas prises en compte. On considère ce rotor essentiellement comme un élément rigide susceptible d'être entraîné par le stator. En fait, dans un moteur de petite dimension, ce rotor ne peut être considéré comme parfaitement inerte et il s'y produira nécessairement des vibrations induites par les vibrations statoriques. Ainsi, de façon générale, le rotor aura une fréquence propre dans un mode de vibration donné nettement distinct de celui du stator. Par exemple, si le stator est excité à 40 kHz dans le mode 9, le rotor pourra avoir une fréquence de résonance d'une valeur quelconque, par exemple comprise entre 30 et 50 kHz, et pas nécessairement dans le mode 9. Les vibrations naturelles dans le rotor sont donc en général sans relation de fréquence et de phase avec les vibrations statoriques. Indépendamment du fait que cela ne permet pas d'utiliser le mode de détection de vitesse de rotor qui sera exposé ci-après, ceci entraîne la présence de bruit à des fréquences audibles dues à des battements entre la fréquence appliquée au stator et les fréquences parasites générées au rotor. Ainsi, bien qu'un moteur du type décrit à entraînement piézoélectrique soit théoriquement un moteur à faible bruit puisque les fréquences d'excitation sont élevées (de l'ordre de 40 kHz, c'est-à-dire au-dessus des fréquences audibles) et que les fréquences de rotation sont faibles (quelques tours par minute, c'est-à-dire en dessous des fréquences audibles), ces moteurs se sont néanmoins avérés relativement bruyants en raison, estime la demanderesse, des battements susmentionnés.

La présente invention propose des structures de rotor propres à favoriser dans celui-ci le développement de vibrations axiales liées aux ondes de surface développées dans le stator.

Selon un premier aspect de la présente invention, le rotor est dimensionné et le matériau le constituant est choisi pour que le rotor présente des fréquences de résonance, c'est-à-dire la possibilité de propagation d'ondes progressives, dans la même plage que le stator mais avec un coefficient de qualité ou facteur de résonance plus faible. Pour cela, une solution simple consiste à utiliser un rotor sensiblement similaire au stator avec toutefois de légères différences, par exemple une variation d'épaisseur, pour décentrer légèrement les fréquences de résonance. Ainsi, quand le stator est excité, une onde progressive de même fréquence et de plus faible amplitude que l'onde progressive du stator est induite sur la face du rotor en regard du stator. Le capteur piézoélectrique 30 permet alors de détecter cette onde. Ce peut être un capteur de petite dimension qui est simple à câbler puisqu'il ne comprend que deux sorties et qu'il est situé sur la face arrière du rotor par rapport au stator.

Il importe comme on l'a exposé précédemment que le rotor présente un coefficient de qualité ou facteur de résonance pour la fréquence et le mode considéré non nul mais plus faible que celui du stator. En effet, sinon, des déformations sensiblement de même amplitude seraient générées sur le stator et le rotor et l'effet décrit en figure 1 risquerait de ne plus se produire puisque chaque ondulation saillante du rotor correspondrait à une ondulation en creux du rotor et il y aurait un blocage de la rotation.

Quand le rotor ne tourne pas, l'onde produite au rotor a la même fréquence que l'onde au stator. Quand le rotor tourne par rapport au stator, les ondes produites au rotor et au stator ont une fréquence décalée de la vitesse de rotation relative du rotor par rapport au stator. On peut donc considérer que, si le stator est excité à une fréquence fs, le signal sur le rotor sera à une fréquence fr=fs+F, où F correspond à la fréquence de rotation de ce rotor. Cette relation suppose que F est très inférieur à fs et que le rotor est entraîné par le stator.

Selon un second aspect de la présente invention, le rotor est conformé pour présenter une souplesse (compliance) suffisante dans le sens axial pour que des vibrations axiales appliquées à sa face inférieure provoquent une déformation correspondante de sa face supérieure. Ce résultat peut être obtenu par exemple en utilisant un rotor déformable à disque souple de liaison entre l'arbre et la couronne ou jante rotorique destinée à être en contact avec une couronne statorique.

Une telle structure est illustrée très schématiquement dans la vue en coupe de la figure 4. Sur l'arbre 32 est montée, par l'intermédiaire d'un disque ou voile très mince 44 (épaisseur inférieure au mm), une couronne statorique 45 dont les dimensions (quelques mm) et le matériau (par exemple du dural) sont choisis pour lui conférer une souplesse suffisante dans le sens axial. Cette souplesse ne doit pas être excessive pour permettre un entraînement du rotor par le stator. Le capteur piézoélectrique 30 est de préférence monté sur le voile 44 au voisinage de la couronne 45.

La figure 5 illustre un mode d'exploitation du signal capté au rotor.

Dans cette figure, on a représenté d'une part la céramique excitatrice 22 liée au stator, et son signal d'excitation biphasé fourni par un onduleur biphasé 50. La céramique 22 comprend en outre une zone 51 correspondant à un détecteur et fournissant le signal à la fréquence fs à laquelle est excité le stator. Le rotor 28 porte un capteur piézoélectrique 30 qui fournit un signal à la fréquence fr qui, comme on l'a indiqué précédemment, en raison du choix des caractéristiques mécaniques et vibratoires du rotor, est égale à fs+F. Un circuit mélangeur à réjection de somme 53 fournit un signal à fréquence F. Ce signal est envoyé à une boucle de régulation pour commander la fréquence fournie à l'ondulateur biphasé 50 et fixer ainsi de façon asservie la fréquence de rotation du moteur. La boucle comprend par exemple de façon classique un comparateur 55 comparant la fréquence F à une fréquence de consigne F₀ et le signal d'erreur est envoyé à un filtre 57 puis à un oscillateur à commande en tension 59 dont les sorties sont divisées par l'onduleur biphasé pour être appliquées à la céramique excitatrice 22.

On notera que ce mode de détection et d'asservissement est particulièrement simple.

Par ailleurs, dans l'art antérieur, et dans la description précédente, on a présenté la machine tournante décrite comme un moteur dans lequel le rotor est entraîné par le stator.

Selon un aspect de la présente invention, on prévoit que le revêtement statorique ou rotorique 321 est tel que les surfaces en regard sont extrêmement glissantes (par exemple un revêtement en téflon). Alors, les vibrations du stator sont transmises au rotor mais ce rotor n'est pas entraîné en rotation par le stator. On prévoit alors que l'arbre 32 est entraîné en rotation par une autre machine dont on veut détecter la vitesse de rotation. On compare alors simplement le signal fr de sortie du rotor au signal fs de sortie du stator pour avoir le signal à la fréquence F recherchée. Ceci constitue un capteur tachymétrique simple auquel est particulièrement adapté le rotor décrit selon le premier aspect de la présente invention. On notera aussi que le sens de rotation est déterminé par le signe de la différence fr-fs.

Bien que la présente invention ait été décrite dans le cadre d'un capteur de vitesse ou capteur tachymétrique, on notera qu'il est également possible, au prix d'un montage électronique plus complexe, de réaliser une mesure de différence de phase entre l'onde au stator et l'onde au rotor, ce qui permet de fournir des indications de position comme cela a été effectué par les systèmes de l'art antérieur qui eux par contre sont plus complexes pour fournir des informations de vitesse.

## Revendications

1. Machine tournante comprenant deux pièces annulaires coaxiales mobiles en rotation l'une par rapport à l'autre dont les faces en vis-à-vis sont en contact, la première pièce (21) étant excitée en vibration pour y créer des ondes progressives de surface à une fréquence située dans une plage de fréquences de résonance de rang donné de cette première pièce, caractérisée en ce que :
la deuxième pièce (28) est telle que des vibrations dans la première pièce y excitent des vibrations de même fréquence et de moindre amplitude quand ces deux pièces sont fixes l'une par rapport à l'autre,
un détecteur de vibration (30) est monté sur la deuxième pièce,
des moyens (53) sont prévus pour fournir un signal (F) caractéristique de la différence de fréquence entre la fréquence d'excitation de la première pièce et la fréquence de vibration détectée sur la deuxième pièce, cette différence étant caractéristique de la vitesse de rotation relative des deux pièces annulaires.

2. Machine tournante selon la revendication 1, caractérisée en ce que la première pièce est un stator et la deuxième pièce un rotor.

3. Machine tournante selon la revendication 2, caractérisée en ce que le rotor est dimensionné pour présenter une fréquence de résonance pour les ondes acoustiques de surface dans le même mode et sensiblement dans la même plage que le stator.

4. Machine tournante selon la revendication 2, caractérisée en ce que le rotor est constitué pour qu'il présente une forte souplesse (compliance) dans une direction axiale.

5. Machine tournante selon la revendication 4, caractérisée en ce que le rotor comprend un voile mince de liaison entre l'arbre de rotation et une couronne rotorique de faible section, le détecteur de vibration étant une céramique disposée sur le voile au voisinage de la couronne.

6. Machine tournante selon la revendication 1, constituant un moteur, dans laquelle le coefficient de frottement entre les pièces en regard est élevé, caractérisée en ce que le signal de différence est envoyé à une première entrée d'un circuit d'asservissement (55, 57, 59, 50) dont la deuxième entrée reçoit un signal de consigne (F₀).

7. Machine tournante selon la revendication 1, constituant un capteur tachymétrique, caractérisée en ce que le coefficient de frottement entre les pièces en regard est faible, la première pièce (21) étant fixe et la deuxième pièce (28) étant solidaire d'un arbre (32) entraîné dont on veut détecter la vitesse.

## Patentansprüche

1. Rotierende Maschine mit zwei ringförmigen koaxialen beweglichen Teilen, die in Bezug zueinander rotieren und deren Stirnflächen in Kontakt sind, wobei das erste Teil (21) zu Schwingungen angeregt wird, um dadurch fortschreitende Oberflächenwellen mit einer Frequenz zu erzeugen, die innerhalb eines Bereiches von Resonanzfrequenzen des ersten Teils erzeugbar sind, dadurch gekennzeichnet, dass:
das zweite Teil (28) derart ausgebildet ist, dass Schwingungen im ersten Teil Schwingungen der gleichen Frequenz mit einer kleineren Amplitude anregen, wenn die beiden Teile fest miteinander verbunden sind,
auf dem zweiten Teil ein Schwingungsdetektor (30) angebracht ist,
Mittel (53) zum Liefern eines Signals (F) vorgesehen sind, welches der Frequenzdifferenz zwischen der Anregungsfrequenz des ersten Teils und der auf dem zweiten Teil detektierten Schwingungsfrequenz entspricht, wobei diese Differenz der relativen Rotationsgeschwindigkeit der beiden ringförmigen Teile zueinander entspricht.

2. Rotierende Maschine nach Anspruch 1, dadurch gekennzeichnet, dass das erste Teil ein Stator und das zweite Teil ein Rotor ist.

3. Rotierende Maschine nach Anspruch 2, dadurch gekennzeichnet, dass der Rotor dimensioniert ist, um eine Resonanzfrequenz für die akustischen Oberflächenwellen im gleichen Modus und im wesentlichen im gleichen Bereich wie der Stator aufzuweisen.

4. Rotierende Maschine nach Anspruch 2, dadurch gekennzeichnet, dass der Rotor derart ausgebildet ist, dass er in einer axialen Richtung eine hohe Nachgiebigkeit (Compliance) aufweist.

5. Rotierende Maschine nach Anspruch 4, dadurch gekennzeichnet, dass der Rotor eine dünne Verbindungsschicht zwischen der Rotationswelle und einem Rotorring kleinen Querschnitts enthält, wobei der Schwingungsdetektor eine Keramik ist, die auf der Schicht in der Nähe des Ringes angeordnet ist.

6. Rotierende Maschine nach Anspruch 1, die einen Motor bildet, wobei der Reibungskoeffizient zwischen den sich gegenüberstehenden Teilen hoch ist, dadurch gekennzeichnet, dass das Differenzsignal zu einem ersten Eingang eines Regelungsschaltkreises (55, 57, 59, 50) geleitet ist, dessen zweiter Eingang ein Einstellsignal (F₀) empfängt.

7. Rotierende Maschine nach Anspruch 1, die einen Tachometer bildet, dadurch gekennzeichnet, dass der Reibungskoeffizient zwischen den sich gegenüberstehenden Teilen niedrig ist, wobei das erste Teil (21) fest angeordnet und das zweite Teil (28) mit einer angetriebenen Welle (32) einstückig ist, deren Geschwindigkeit zu messen ist.

## Claims

1. A rotating machine comprising two coaxial annular parts rotating one with respect to the other, whose facing surfaces are in contact, the first part (21) being excited so as to vibrate to generate progressive surface waves at a frequency within a range of resonance frequencies of a predetermined rank of said first part, characterized in that:
the second part (28) is such that the vibrations in the first part generate in the second part vibrations having the same frequency and a smaller amplitude when these two parts are fixed one with respect to the other;
a vibration detector (30) is mounted on the second part;
means (53) are provided for providing a signal (F) corresponding to the difference in frequency between the excitation frequency of the first part and the vibration frequency detected on the second part, said difference corresponding to the relative rotation speed of the two annular parts.

2. The rotating machine of claim 1, characterized in that the first part is a stator and the second part is a rotor.

3. The rotating machine of claim 2, characterized in that the size of the rotor is designed so that the surface acoustic waves have a resonance frequency within the same mode and substantially within the same magnitude range as the stator.

4. The rotating machine of claim 2, characterized in that the rotor is designed to have a high flexibility (compliance) along an axial direction.

5. The rotating machine of claim 4, characterized in that the rotor includes a thin connection sheet between the rotation shaft and a rotor ring having a small section, the vibration detector being made of ceramic disposed on the thin sheet near the ring.

6. The rotating machine of claim 1, constituting a motor, wherein the friction coefficient between the facing parts is high, characterized in that the difference signal is provided to a first input of a control circuit (55, 57, 59, 50) whose second input receives a reference signal (F₀).

7. The rotating machine of claim 1, constituting a tachometer, characterized in that the friction coefficient between the two facing parts is low, the first part (21) being fixed and the second part (28) being integral with a driven shaft (32) whose speed is to be measured.
